# EUROPÄISCHE PATENTANMELDUNG

(11) **EP 4 838 328 A1**
(43) Veröffentlichungstag der Anmeldung: **11.11.2026**
(21) Anmeldenummer: 26159227.3
(22) Anmeldetag: 18.02.2026
(51) Int. Cl.: G05D 7/06, A01M 7/00, B05B 1/20, B05B 12/00, B05B 12/08, B05B 15/58, B05B 9/04

(54) **VERFAHREN ZUR DRUCKREGELUNG EINER SPRITZFLÜSSIGKEIT, DRUCKREGELUNG FÜR EINE SPRITZFLÜSSIGKEIT UND FELDSPRITZE ZUM AUSBRINGEN VON SPRITZFLÜSSIGKEIT**

(30) Priorität: 08.05.2025 DE 102025117635
(71) Anmelder: Amazonen-Werke H. Dreyer SE & Co. KG, 49205 Hasbergen (DE)
(72) Erfinder: Ruschinzik, Lukas, 49205 Hasbergen-Gaste (DE); Wessels, Thomas, 49205 Hasbergen-Gaste (DE)
(74) Vertreter: Heisel, Per-Christian

(57) **Zusammenfassung**

Die Erfindung betrifft ein Verfahren zur Druckregelung einer Spritzflüssigkeit, die von einer Feldspritze ausbringbar ist, eine Druckregelung für eine Spritzflüssigkeit, die von einer Feldspritze ausbringbar ist, und eine Feldspritze zum Ausbringen von Spritzflüssigkeit.

## Beschreibung

Die Erfindung betrifft ein Verfahren zur Druckregelung einer Spritzflüssigkeit, die von einer Feldspritze ausbringbar ist, eine Druckregelung für eine Spritzflüssigkeit, die von einer Feldspritze ausbringbar ist, und eine Feldspritze zum Ausbringen von Spritzflüssigkeit.

Während einer sog. Spot-Applikation mit einer Feldspritze ist das Einregeln des Drucks am Gestänge mit den dort angebrachten Düsen zum Ausbringen einer Spritzflüssigkeit wichtig.

Wenn zusätzliche Düsen geöffnet werden, sinkt der Druck an den bereits offenen Düsen ab. Dies führt zu einer unerwünscht niedrigeren Ausbringmenge an Spritzflüssigkeit. Konträr verhält es sich im umgekehrten Fall, wenn Düsen geschlossen werden.

Um dieser Problemstellung zu begegnen, wird ein hydraulischer Druckregler eingesetzt, dessen Regelung jedoch keine zufriedenstellende Ergebnisse bietet, da diese ein träges Verhalten aufweist. Dadurch erzielen moderne Feldspritzen nicht die bestmöglichen Ergebnisse hinsichtlich des Ausbringens von Spritzflüssigkeit.

Daher ist es Aufgabe der vorliegenden Erfindung, ein Verfahren zur Druckregelung einer Spritzflüssigkeit, eine Druckregelung für eine Spritzflüssigkeit und eine Feldspritze zum Ausbringen von Spritzflüssigkeit anzugeben, welche ein Ausbringen von Spritzflüssigkeit verbessern.

Diese Aufgabe wird durch die Merkmale der unabhängigen Patentansprüche gelöst. Weitere vorteilhafte Weiterbildungen sind Gegenstand der Unteransprüche.

Ein erster Aspekt der vorliegenden Erfindung umfasst ein Verfahren zur Druckregelung einer Spritzflüssigkeit, die von einer Feldspritze ausbringbar ist.

Ein Schritt des Verfahren weist ein Erfassen mindestens einer Düse einer Feldspritze, die an einer Feldspritze eingesetzt wird, durch Eingabe eines Anwenders an einem Eingabemittel der Feldspritze oder an einem Eingabemittel einer Druckregelung der Feldspritze auf.

Ein weiterer Schritt des Verfahrens umfasst ein Auslesen einer zur mindestens einen erfassten Düse zugehörigen Düsen-Ausbringkurve aus einer Datenbank. Hierbei kann die Datenbank per Funk von einem entfernten Computer abgerufen werden. Die ausgelesene Düsen-Ausbringkurve kann die Abhängigkeit des Durchflusses (z. B. Liter pro Minute [I/min]) durch die mindestens eine erfasste Düse vom Druck (z. B. bar) auf die mindestens eine erfasste Düse beschreiben.

Ferner umfasst ein Verfahrensschritt ein Erfassen eines Soll-Durchflusses, der durch die mindestens eine erfasste Düse auszubringen ist Das Erfassen kann durch Eingabe eines Anwenders an einem Eingabemittel der Feldspritze erfolgen. Dabei kann beim Erfassen eines Soll-Durchflusses eine von einem Anwender eingegebene Ausbringmenge (z. B. in Liter pro Hektar [I/ha]) in den Soll-Durchfluss Durchflusses (z. B. Liter pro Minute [I/min]), z. B. pro Düse, umgerechnet werden.

Des Weiteren umfasst das Verfahren ein Einstellen eines Soll-Drucks für den erfassten Soll-Durchfluss, z. B. pro Düse, anhand der ausgelesenen Düsen-Ausbringkurve.

Dabei weist ein Verfahrensschritt im Betrieb der Feldspritze ein Erfassen eines Ist-Durchflusses der Spritzflüssigkeit, z. B. durch alle Düsen, auf, die im Moment ausgebracht wird. Dies kann beispielsweise mithilfe einer ersten und/oder zweiten Durchflussmesseinrichtung einer Druckregelung für eine Spritzflüssigkeit geschehen.

Außerdem umfasst ein Verfahrensschritt im Betrieb der Feldspritze ein Erfassen eines Ist-Druckes, z. B. auf alle Düsen, mit welchem Spritzflüssigkeit im Moment ausgebracht und/oder beaufschlagt wird. Dies kann mithilfe einer Druckmesseinrichtung einer Druckregelung für eine Spritzflüssigkeit geschehen.

Als weiteren Schritt umfasst das Verfahren ein Bilden eines Korrekturfaktors zur Korrektur des erfassten Ist-Durchflusses auf den Wert des erfassten Soll-Durchflusses.

Ein weiterer Schritt umfasst ein Korrigieren der ausgelesenen Düsen-Ausbringkurve um den gebildeten Korrekturfaktor.

Mit dem Korrekturfaktor ist es - generell geschildert - möglich, Fertigungs- und Montagetoleranzen zu korrigieren, Verschleiß an Düsen und Verstopfungen in Fluidleitungen und/oder Düsen frühzeitig zu erkennen und/oder die Größe von Düsen zu berechnen und damit die Druckregelung zu verbessern.

Ferner weist das Verfahren als weiteren Schritt ein Einstellen eines geänderten Soll-Drucks für den erfassten Soll-Durchfluss anhand der korrigierten, ausgelesenen Düsen-Ausbringkurve auf, die um den gebildeten Korrekturfaktor korrigiert wurde.

Zudem kann das Verfahren als einen Verfahrensschritt während der Arbeit auf einem Feld, z. B. mit einer Feldspritze, ein Wiederholen der Schritte von Erfassen eines Ist-Durchflusses der Spritzflüssigkeit bis zum Einstellen eines geänderten Soll-Drucks aufweisen.

Beim Bilden eines Korrekturfaktors kann die ausgelesene Düsen-Ausbringkurve mithilfe einer Gleichung, wie z. B. einer Exponentialgleichung und/oder einer Polynomgleichung, und/oder mithilfe eines numerischen Verfahrens angenähert und/oder abgebildet werden, sodass für einen Durchfluss der zugehörige Druck für die mindestens eine erfasste Düse errechenbar ist und/oder sodass für einen Druck der zugehörige Durchfluss für die mindestens eine erfasste Düse errechenbar ist.

Ferner kann beim Bilden eines Korrekturfaktors der Korrekturfaktor aus dem Quotienten von erfasstem Ist-Durchfluss und einem errechneten Ist-Durchfluss gebildet werden.

Dabei kann der errechnete Ist-Durchfluss aus dem erfassten Ist-Druck und der angenäherten Düsen-Ausbringkurve errechnet werden, die mithilfe einer Gleichung und/oder mithilfe eines numerischen Verfahrens angenähert werden kann.

Ferner kann der errechnete Ist-Durchfluss in Abhängigkeit zum erfassten Ist-Druck stehen. Auch kann der errechnete Ist-Durchfluss abhängig vom Quadrat des erfassten Ist-Drucks sein.

Des Weiteren kann beim Korrigieren der ausgelesenen Düsen-Ausbringkurve um den gebildeten Korrekturfaktor, der Soll-Druck für den erfassten Soll-Durchfluss aus dem erfassten Soll-Durchfluss und dem gebildeten Korrekturfaktor errechnet werden.

Zudem kann beim Korrigieren der ausgelesenen Düsen-Ausbringkurve um den gebildeten Korrekturfaktor die angenäherte Düsen-Ausbringkurve um den gebildeten Korrekturfaktor verschoben werden und/oder mit dem gebildeten Korrekturfaktor multipliziert werden.

Zudem kann beim Korrigieren der ausgelesenen Düsen-Ausbringkurve um den gebildeten Korrekturfaktor die ausgelesene Düsen-Ausbringkurve mithilfe einer Gleichung, wie z. B. einer Exponentialgleichung und/oder einer Polynomgleichung, und/oder mithilfe eines numerischen Verfahrens angenähert und/oder abgebildet werden, sodass für einen Durchfluss der zugehörige Druck für die mindestens eine erfasste Düse errechenbar ist und/oder sodass für einen Druck der zugehörige Durchfluss für die mindestens eine erfasste Düse errechenbar ist.

Des Weiteren kann beim Korrigieren der ausgelesenen Düsen-Ausbringkurve um den gebildeten Korrekturfaktor die angenäherte und/oder abgebildete Gleichung und/oder das angenäherte und/oder abgebildete numerische Verfahren mit dem gebildeten Korrekturfaktor verändert werden, z. B. durch Multiplikation des gebildeten Korrekturfaktors mit der Gleichung und/oder als Faktor in dem numerischen Verfahren.

Ein zweiter Aspekt der vorliegenden Erfindung umfasst eine Druckregelung für eine Spritzflüssigkeit.

Es wird ausdrücklich darauf hingewiesen, dass die Merkmale des Verfahrens, wie sie unter dem ersten Aspekt erwähnt werden, einzeln oder miteinander kombinierbar bei der Druckregelung Anwendung finden können.

Eine Druckregelung für eine Spritzflüssigkeit, die von einer Feldspritze ausbringbar ist, umfasst ein Eingabemittel einer Feldspritze zur Erfassung einer Ausbringmenge von Spritzflüssigkeit durch eine Feldspritze und zur Eingabe für einen Anwender.

Ferner umfasst die Druckregelung eine erste Recheneinheit zur Berechnung eines Soll-Durchflusses (l/min) aus einer Ausbringmenge (l/ha) und unter Berücksichtigung einer Ist-Fahrgeschwindigkeit einer Feldspritze sowie einer Ist-Anzahl der Düsen, die Spritzflüssigkeit, z. B. im Betrieb, ausbringen. Dabei weist die erste Recheneinheit einen Messwert-Eingang für eine Ist-Fahrgeschwindigkeit einer Feldspritze sowie für eine Ist-Anzahl der Düsen auf, die Spritzflüssigkeit ausbringen.

Die Ist-Fahrgeschwindigkeit und/oder die Ist-Anzahl der Düsen kann von einer Sensoreinrichtung der Druckregelung erfasst werden.

Des Weiteren weist die Druckregelung eine zweite Recheneinheit zur Berechnung eines Soll-Drucks für den Soll-Durchfluss der ersten Recheneinheit auf.

Dabei ist die zweite Recheneinheit eingerichtet und ausgebildet, das Verfahren zur Druckregelung einer Spritzflüssigkeit, die von einer Feldspritze ausbringbar ist, nach dem ersten Aspekt auszuführen.

Des Weiteren kann die zweite Recheneinheit einen Messwert-Eingang für eine erste Durchflussmesseinrichtung zur Messung des Durchflusses von Spritzflüssigkeit von einem Tank einer Feldspritze in Richtung eines Gestänges einer Feldspritze aufweisen.

Alternativ oder zusätzlich kann die zweite Recheneinheit einen Messwert-Eingang für eine Druckmesseinrichtung zur Messung des Ist-Drucks umfassen, mit welchem Spritzflüssigkeit von einer Feldspritze beaufschlagt werden kann.

Alternativ oder zusätzlich kann die zweite Recheneinheit einen Messwert-Eingang für eine zweite Durchflussmesseinrichtung zur Messung des Durchflusses von Spritzflüssigkeit von einem Gestänge einer Feldspritze in Richtung eines Tanks einer Feldspritze umfassen.

Des Weiteren kann die zweite Recheneinheit eingerichtet und ausgebildet sein, aus einem Messwert einer ersten Durchflussmesseinrichtung einer Feldspritze und aus einem Messwert einer zweiten Durchflussmesseinrichtung einer Feldspritze, durch Differenzbildung den Ist-Durchfluss durch Düsen eines Gestänges einer Feldspritze zu ermitteln.

Zudem kann die Druckregelung eine Additionsstelle zur Ermittlung der Differenz zwischen aktuellem Ist-Druck und einem geänderten Soll-Druck für den erfassten Soll-Durchfluss, z. B. anhand der korrigierten, ausgelesenen Düsen-Ausbringkurve, die mithilfe des Verfahren nach dem ersten Aspekt ermittelt wurde, umfassen.

Alternativ oder zusätzlich kann die Druckregelung eine Drucksteuereinrichtung zur Steuerung eines Druckreglers einer Feldspritze zum Ausbringen von Spritzflüssigkeit und zur Minimierung der ermittelten Differenz zwischen aktuellem Ist-Druck und einem geänderten Soll-Druck für den erfassten Soll-Durchfluss, z. B. anhand der korrigierten, ausgelesenen Düsen-Ausbringkurve, die mithilfe des Verfahrens nach dem ersten Aspekt ermittelt wurde, aufweisen.

Ein dritter Aspekt der vorliegenden Erfindung umfasst eine Feldspritze zum Ausbringen von Spritzflüssigkeit.

Es wird ausdrücklich darauf hingewiesen, dass die Merkmale des Verfahrens, wie sie unter dem ersten Aspekt erwähnt werden, einzeln oder miteinander kombinierbar bei der Feldspritze Anwendung finden können.

Ferner wird ausdrücklich darauf hingewiesen, dass die Merkmale der Druckregelung, wie sie unter dem zweiten Aspekt erwähnt werden, einzeln oder miteinander kombinierbar bei der Feldspritze Anwendung finden können.

Eine Feldspritze zum Ausbringen von Spritzflüssigkeit umfasst ein Gestänge mit Spritzdüsen, einen Tank für Spritzflüssigkeit und eine Pumpe zum Pumpen von Spritzflüssigkeit aus dem Tank zum Gestänge.

Ferner umfasst die Feldspritze eine erste Durchflussmesseinrichtung zur Messung des Durchflusses von Spritzflüssigkeit vom Tank in Richtung des Gestänges, wobei die erste Durchflussmesseinrichtung in einer ersten Fluidleitung zwischen Pumpe und Gestänge angeordnet sein kann.

Zudem umfasst die Feldspritze eine Druckmesseinrichtung zur Messung des Ist-Drucks, mit welchem Spritzflüssigkeit beaufschlagt wird, wobei die Druckmesseinrichtung in der ersten Fluidleitung zwischen Pumpe und Gestänge angeordnet sein kann.

Auch umfasst die Feldspritze zweite Durchflussmesseinrichtung zur Messung des Durchflusses von Spritzflüssigkeit vom Gestänge in Richtung des Tanks, wobei die zweite Durchflussmesseinrichtung in einer zweiten Fluidleitung zwischen Gestänge und Tank angeordnet sein kann.

Des Weiteren weist die Feldspritze einen Druckregler zur Druckregelung in der ersten Fluidleitung auf, wobei der Druckregler nach der Pumpe sowie zwischen Pumpe und Tank in einer dritten Fluidleitung angeordnet sein kann.

Außerdem umfasst die Feldspritze eine Druckregelung für eine Spritzflüssigkeit, die von der Feldspritze ausbringbar ist, nach dem zweiten Aspekt.

Nachstehend wird die Erfindung anhand eines Ausführungsbeispiels in Verbindung mit zugehörigen Zeichnungen näher erläutert. Hierbei zeigen schematisch:
- **Fig. 1**: eine Feldspritze zum Ausbringen von Spritzflüssigkeit;
- **Fig. 2**: die Druckregelung der Feldspritze aus Figur 1; und
- **Fig. 3**: Gleichungen und ein Diagramm zur Erläuterung des Verfahrens zur Druckregelung einer Spritzflüssigkeit.

In der nachfolgenden Beschreibung werden gleiche Bezugszeichen für gleiche Gegenstände verwendet.

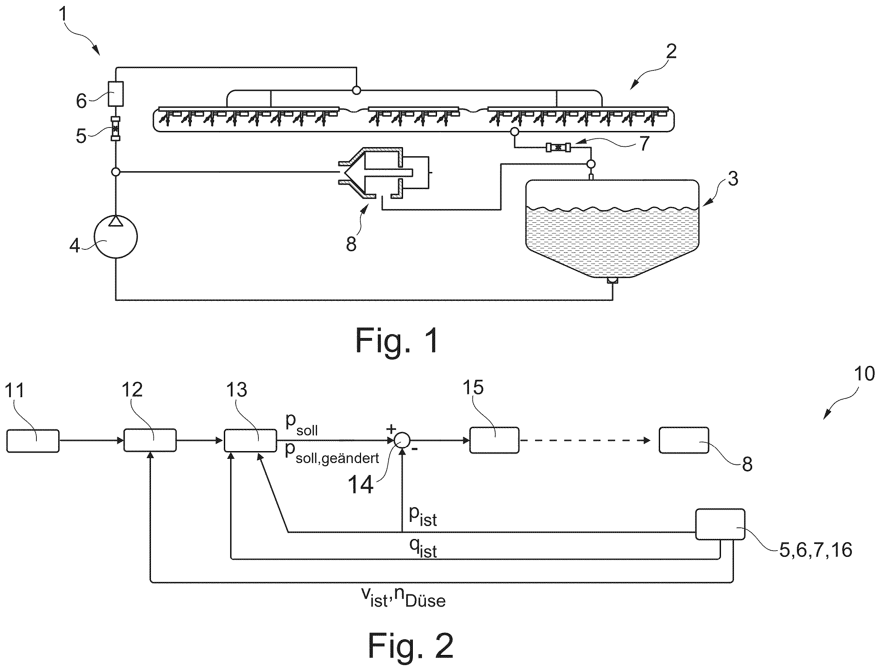

Figur 1 zeigt schematisch eine Feldspritze 1 zum Ausbringen von Spritzflüssigkeit.

Dabei hat die Feldspritze 1 gemäß Figur 1 ein Gestänge 2 mit Spritzdüsen, einen Tank 3 für Spritzflüssigkeit und eine Pumpe 4 zum Pumpen von Spritzflüssigkeit aus dem Tank 3 zum Gestänge 2.

Des Weiteren umfasst die Feldspritze 1 eine erste Durchflussmesseinrichtung 5 zur Messung des Durchflusses von Spritzflüssigkeit vom Tank 3 in Richtung des Gestänges 2. Dabei ist die erste Durchflussmesseinrichtung 5 in einer ersten Fluidleitung zwischen Pumpe 4 und Gestänge 2 angeordnet.

Ferner umfasst die Feldspritze 1 eine Druckmesseinrichtung 6 zur Messung des Ist-Drucks pᵢₛₜ, mit welchem Spritzflüssigkeit beaufschlagt wird. Hierbei ist die Druckmesseinrichtung 6 in der ersten Fluidleitung zwischen Pumpe 4 und Gestänge 2 angeordnet.

Außerdem zeigt Figur 1, dass die Feldspritze 1 eine zweite Durchflussmesseinrichtung 7 zur Messung des Durchflusses von Spritzflüssigkeit vom Gestänge 2 in Richtung des Tanks 3 umfasst. Die zweite Durchflussmesseinrichtung 7 ist in einer zweiten Fluidleitung zwischen Gestänge 2 und Tank 3 angeordnet.

Zudem geht aus Figur 1 hervor, dass die Feldspritze 1 einen Druckregler 8 zur Druckregelung in der ersten Fluidleitung aufweist, der nach der Pumpe 4 sowie zwischen Pumpe 4 und Tank 3 in einer dritten Fluidleitung angeordnet ist.

Des Weiteren weist die Feldspritze 1 eine Druckregelung 10 für eine Spritzflüssigkeit (nicht dargestellt in Figur 1, jedoch in Figur 2), die von der Feldspritze 1 ausbringbar ist, auf.

Figur 2 zeigt die Druckregelung 10 der Feldspritze 1 aus Figur 1.

Gemäß Figur 2 hat die Druckregelung 10 ein Eingabemittel 11 zur Erfassung einer Ausbringmenge von Spritzflüssigkeit durch die Feldspritze 1 und zur Eingabe für einen Anwender.

Außerdem zeigt Figur 2, dass die Druckregelung 10 eine erste Recheneinheit 12 zur Berechnung eines Soll-Durchflusses qₛₒₗₗ, z. B. in Liter/min, aus einer Ausbringmenge, z. B. in Liter/ha, und unter Berücksichtigung einer Ist-Fahrgeschwindigkeit v der Feldspritze 1 sowie einer Ist-Anzahl n der Düsen hat, die Spritzflüssigkeit, z. B. im Betrieb und/oder im Moment, ausbringen. Dabei hat die erste Recheneinheit 12 einen Messwert-Eingang für eine Ist-Fahrgeschwindigkeit v der Feldspritze 1 sowie für eine Ist-Anzahl n der Düsen, die Spritzflüssigkeit ausbringen. Die Ist-Fahrgeschwindigkeit v und die Ist-Anzahl n der Düsen werden von einer Sensoreinrichtung 16 der Druckregelung 10 erfasst.

Des Weiteren zeigt Figur 2, dass die Druckregelung 10 eine zweite Recheneinheit 13 zur Berechnung eines Soll-Drucks pₛₒₗₗ für den Soll-Durchfluss qₛₒₗₗ der ersten Recheneinheit 12 umfasst. Dabei ist die zweite Recheneinheit 13 eingerichtet und ausgebildet, ein Verfahren zur Druckregelung einer Spritzflüssigkeit, die von der Feldspritze 1 ausbringbar ist, auszuführen. Das Verfahren wird weiter unten geschildert.

Zudem weist die zweite Recheneinheit 13 einen Messwert-Eingang für die erste Durchflussmesseinrichtung 5 zur Messung des Durchflusses von Spritzflüssigkeit vom Tank 3 der Feldspritze 1 in Richtung des Gestänges 2 der Feldspritze 1 auf.

Dabei hat die zweite Recheneinheit 13 einen Messwert-Eingang für die Druckmesseinrichtung 6 zur Messung des Ist-Drucks pᵢₛₜ, mit welchem Spritzflüssigkeit von der Feldspritze 1 beaufschlagt wird.

Ferner umfasst die zweite Recheneinheit 13 einen Messwert-Eingang für die zweite Durchflussmesseinrichtung 7 zur Messung des Durchflusses von Spritzflüssigkeit vom Gestänge 2 der Feldspritze 1 in Richtung des Tanks 3 der Feldspritze 1.

Außerdem ist die zweite Recheneinheit 13 eingerichtet und ausgebildet, aus einem Messwert der ersten Durchflussmesseinrichtung 5 und aus einem Messwert der zweiten Durchflussmesseinrichtung 7, durch Differenzbildung den Ist-Durchfluss qᵢₛₜ durch Düsen des Gestänges 2 zu ermitteln.

Des Weiteren zeigt Figur 2, dass die Druckregelung 10 eine Additionsstelle 14 zur Ermittlung der Differenz zwischen aktuellem Ist-Druck pᵢₛₜ und einem geänderten Soll-Druck p_{soll, geändert} für den erfassten Soll-Durchfluss qₛₒₗₗ anhand der korrigierten, ausgelesenen Düsen-Ausbringkurve, die mithilfe des noch zu schildernden Verfahrens (siehe weiter unten) ermittelt wurde, aufweist.

Ferner hat gemäß Figur 2 die Druckregelung 10 eine Drucksteuereinrichtung 15 zur Steuerung des Druckreglers 8 der Feldspritze 1 zum Ausbringen von Spritzflüssigkeit und zur Minimierung der ermittelten Differenz zwischen aktuellem Ist-Druck pᵢₛₜ und einem geänderten Soll-Druck pₛₒₗₗ, _{geändert} für den erfassten Soll-Durchfluss qₛₒₗₗ.

Nachstehend wird das bereits erwähnte Verfahren zur Druckregelung einer Spritzflüssigkeit, die von der Feldspritze 1 ausbringbar ist, beschrieben. Das Verfahren läuft in der zweiten Recheneinheit 13 ab.

Hierbei umfasst das Verfahren als einen ersten Schritt ein Erfassen der Düsen der Feldspritze 1, die an der Feldspritze 1 eingesetzt werden. Das Erfassen geschieht dabei durch Eingabe eines Anwenders am Eingabemittel 11 der Feldspritze 1 bzw. am Eingabemittel 11 der Druckregelung 10 der Feldspritze 1.

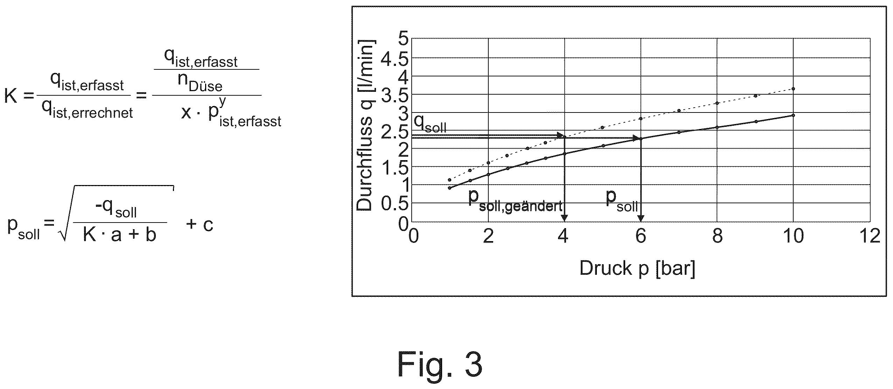

Danach schließt sich ein Auslesen einer zu den erfassten Düsen zugehörigen Düsen-Ausbringkurve (Kurvenverlauf mit durchgezogener Linie in Figur 3) aus einer Datenbank an. Dabei beschreibt die ausgelesene Düsen-Ausbringkurve die Abhängigkeit des Durchflusses durch eine erfasste Düse vom Druck auf die erfasste Düse (vgl. Figur 3).

Des Weiteren umfasst das Verfahren ein Erfassen eines Soll-Durchflusses qₛₒₗₗ, der durch die erfassten Düsen auszubringen ist. Das Erfassen geschieht dabei durch Eingabe eines Anwenders am Eingabemittel 11 der Feldspritze 1. Außerdem wird beim Erfassen eines Soll-Durchflusses qₛₒₗₗ eine von einem Anwender eingegebene Ausbringmenge in den Soll-Durchfluss pro Düse umgerechnet.

Hieraufhin schließt sich als weiterer Verfahrensschritt ein Einstellen eines Soll-Drucks pₛₒₗₗ für den erfassten Soll-Durchfluss qₛₒₗₗ pro Düse anhand der ausgelesenen Düsen-Ausbringkurve (Kurvenverlauf mit durchgezogener Linie in Figur 3) an. Im vorliegenden Beispiel bei qₛₒₗₗ 2,25 I/min ergibt sich bei der verwendeten Düse ein pₛₒₗₗ von 6 bar.

Des Weiteren umfasst das Verfahren als Verfahrensschritt im Betrieb der Feldspritze 1 ein Erfassen eines Ist-Durchflusses q_{ist,ertasst} der Spritzflüssigkeit durch alle Düsen, die im Moment ausgebracht wird. Dies geschieht mithilfe der ersten und zweiten Durchflussmesseinrichtung 5, 7.

Ferner weist ein weiterer Verfahrensschritt im Betrieb der Feldspritze 1 ein Erfassen eines Ist-Druckes p_{ist, erfasst} auf alle Düsen auf, mit welchem Spritzflüssigkeit im Moment ausgebracht bzw. beaufschlagt wird. Dies geschieht mithilfe der Druckmesseinrichtung 6.

Daraufhin wird ein Korrekturfaktor K zur Korrektur des erfassten Ist-Durchflusses q_{ist,er-fasst} auf den Wert des erfassten Soll-Durchflusses qₛₒₗₗ gebildet.

Beim Bilden eines Korrekturfaktors K wird die ausgelesene Düsen-Ausbringkurve mithilfe einer Gleichung, wie z. B. einer Exponentialgleichung und/oder einer Polynomgleichung, angenähert und/oder abgebildet (vgl. Figur 3), sodass für einen Durchfluss der zugehörige Druck für die erfasste Düse errechenbar ist und/oder sodass für einen Druck der zugehörige Durchfluss für die erfasste Düse errechenbar ist.

Ferner wird beim Bilden eines Korrekturfaktors K der Korrekturfaktor K aus dem Quotienten von erfasstem Ist-Durchfluss q_{ist,erfasst} und einem errechneten Ist-Durchfluss q_{ist,errechnet} gebildet (vgl. Figur 3). Der errechnete Ist-Durchfluss q_{ist,errechnet} wird aus dem erfassten Ist-Druck p_{ist, erfasst} und der angenäherten Düsen-Ausbringkurve errechnet, die mithilfe einer Gleichung angenähert ist (vgl. Figur 3). Dabei steht der errechnete Ist-Durchfluss q_{ist,errechnet} in Abhängigkeit zum erfassten Ist-Druck p_{ist, erfasst}. Genauer geschildert ist der errechnete Ist-Durchfluss q_{ist,errechnet} abhängig vom Quadrat des erfassten Ist-Drucks p_{ist, erfasst}.

Als weiteren Schritt umfasst das Verfahren ein Korrigieren der ausgelesenen Düsen-Ausbringkurve um den gebildeten Korrekturfaktor K (Verschieben des Kurvenverlaufs mit durchgezogener Linie um den Korrekturfaktor K, sodass der Kurvenverlauf mit punktierter Linie erhalten wird).

Beim Korrigieren der ausgelesenen Düsen-Ausbringkurve um den gebildeten Korrekturfaktor K wird der Soll-Druck pₛₒₗₗ für den erfassten Soll-Durchfluss qₛₒₗₗ aus dem erfassten Soll-Durchfluss qₛₒₗₗ und dem gebildeten Korrekturfaktor K errechnet (vgl. Figur 3). Anders formuliert, wird beim Korrigieren der ausgelesenen Düsen-Ausbringkurve (Kurvenverlauf mit durchgezogener Linie) um den gebildeten Korrekturfaktor K die angenäherte Düsen-Ausbringkurve um den gebildeten Korrekturfaktor K verschoben bzw. mit dem gebildeten Korrekturfaktor multipliziert (Kurvenverlauf mit punktierter Linie). Vereinfacht dargestellt wird somit - wie schon erwähnt - die Düsen-Ausbringkurve mit punktierter Linie aus Figur 3 erhalten.

Hieraufhin wird ein geänderter Soll-Druck pₛₒₗₗ, _{geändert} für den erfassten Soll-Durchfluss qₛₒₗₗ anhand der korrigierten, ausgelesenen Düsen-Ausbringkurve (Kurvenverlauf mit punktierter Linie), die um den gebildeten Korrekturfaktor K korrigiert wurde, eingestellt (4 bar).

Während der Arbeit auf einem Feld werden die Schritte des Erfassens eines Ist-Durchflusses der Spritzflüssigkeit bis zum Einstellen eines geänderten Soll-Drucks andauernd wiederholt.

### Bezugszeichenliste

- 1: Feldspritze
- 2: Gestänge
- 3: Tank
- 4: Pumpe
- 5: erste Durchflussmesseinrichtung
- 6: Druckmesseinrichtung
- 7: zweite Durchflussmesseinrichtung
- 8: Druckregler

- 10: Druckregelung
- 11: Eingabemittel
- 12: erste Recheneinheit
- 13: zweite Recheneinheit
- 14: Additionsstelle
- 15: Drucksteuereinrichtung
- 16: Sensoreinrichtung

- qₛₒₗₗ: Soll-Durchfluss
- q_{ist,errechnet}: errechneter Ist-Durchfluss
- q_{ist,erfasst}: erfasster Ist-Durchflusses
- p_{ist, erfasst}: erfasster Ist-Druck
- pᵢₛₜ: Ist-Druck

## Patentansprüche

1. Verfahren zur Druckregelung einer Spritzflüssigkeit, die von einer Feldspritze ausbringbar ist, folgende Schritte aufweisend:
- Erfassen mindestens einer Düse einer Feldspritze, die an einer Feldspritze eingesetzt wird, durch Eingabe eines Anwenders an einem Eingabemittel (11) der Feldspritze (1),
- Auslesen einer zur mindestens einen erfassten Düse zugehörigen Düsen-Ausbringkurve aus einer Datenbank,
- Erfassen eines Soll-Durchflusses (qₛₒₗₗ), der durch die mindestens eine erfasste Düse auszubringen ist, durch Eingabe eines Anwenders an einem Eingabemittel der Feldspritze,
- Einstellen eines Soll-Drucks (pₛₒₗₗ) für den erfassten Soll-Durchfluss (qₛₒₗₗ) anhand der ausgelesenen Düsen-Ausbringkurve,
- im Betrieb der Feldspritze, Erfassen eines Ist-Durchflusses (q_{ist,erfasst}) der Spritzflüssigkeit, die im Moment ausgebracht wird,
- im Betrieb der Feldspritze, Erfassen eines Ist-Druckes (p_{ist, erfasst}), mit welchem Spritzflüssigkeit im Moment ausgebracht und/oder beaufschlagt wird,
- Bilden eines Korrekturfaktors (K) zur Korrektur des erfassten Ist-Durchflusses (q_{ist,erfasst}) auf den Wert des erfassten Soll-Durchflusses (qₛₒₗₗ),
- Korrigieren der ausgelesenen Düsen-Ausbringkurve um den gebildeten Korrekturfaktor (K),
- Einstellen eines geänderten Soll-Drucks (p_{soll, geändert}) für den erfassten Soll-Durchfluss (qₛₒₗₗ) anhand der korrigierten, ausgelesenen Düsen-Ausbringkurve, die um den gebildeten Korrekturfaktor (K) korrigiert wurde.

2. Verfahren nach Anspruch 1,
- wobei beim Bilden eines Korrekturfaktors (K) die ausgelesene Düsen-Ausbringkurve mithilfe einer Gleichung und/oder mithilfe eines numerischen Verfahrens angenähert und/oder abgebildet wird, sodass für einen Durchfluss der zugehörige Druck für die mindestens eine erfasste Düse errechenbar ist und/oder sodass für einen Druck der zugehörige Durchfluss für die mindestens eine erfasste Düse errechenbar ist,
- wobei beim Bilden eines Korrekturfaktors (K) der Korrekturfaktor (K) aus dem Quotienten von erfasstem Ist-Durchfluss (q_{ist,erfasst}) und einem errechneten Ist-Durchfluss (q_{ist,errechnet}) gebildet wird, und
- wobei der errechnete Ist-Durchfluss (q_{ist,errechnet}) aus dem erfassten Ist-Druck (p_{ist, erfasst}) und der angenäherten Düsen-Ausbringkurve errechnet wird, die mithilfe einer Gleichung und/oder mithilfe eines numerischen Verfahrens angenähert ist.

3. Druckregelung (10) für eine Spritzflüssigkeit, die von einer Feldspritze ausbringbar ist, aufweisend:
- ein Eingabemittel (11) einer Feldspritze (1) zur Erfassung einer Ausbringmenge von Spritzflüssigkeit durch eine Feldspritze und zur Eingabe für einen Anwender,
- eine erste Recheneinheit (12) zur Berechnung eines Soll-Durchflusses (qₛₒₗₗ) aus einer Ausbringmenge und unter Berücksichtigung einer Ist-Fahrgeschwindigkeit (v) einer Feldspritze (1) sowie einer Ist-Anzahl (n) der Düsen, die Spritzflüssigkeit ausbringen,
- wobei die erste Recheneinheit (12) einen Messwert-Eingang für eine Ist-Fahrgeschwindigkeit (v) einer Feldspritze (1) sowie für eine Ist-Anzahl (n) der Düsen aufweist, die Spritzflüssigkeit ausbringen,
- wobei die Ist-Fahrgeschwindigkeit (v) und/oder die Ist-Anzahl (n) der Düsen von einer Sensoreinrichtung (16) der Druckregelung (10) erfasst werden,
- eine zweite Recheneinheit (13) zur Berechnung eines Soll-Drucks (pₛₒₗₗ) für den Soll-Durchfluss (qₛₒₗₗ) der ersten Recheneinheit (11),
- wobei die zweite Recheneinheit (13) eingerichtet und ausgebildet ist, das Verfahren zur Druckregelung einer Spritzflüssigkeit, die von einer Feldspritze (1) ausbringbar ist, nach Anspruch 1 oder 2 auszuführen.

4. Feldspritze (1) zum Ausbringen von Spritzflüssigkeit aufweisend:
- ein Gestänge (2) mit Spritzdüsen,
- einen Tank (3) für Spritzflüssigkeit,
- eine Pumpe (4) zum Pumpen von Spritzflüssigkeit aus dem Tank (3) zum Gestänge (2),
- eine erste Durchflussmesseinrichtung (5) zur Messung des Durchflusses von Spritzflüssigkeit vom Tank (3) in Richtung des Gestänges (2),
- wobei die erste Durchflussmesseinrichtung (5) in einer ersten Fluidleitung zwischen Pumpe (4) und Gestänge (2) angeordnet ist,
- eine Druckmesseinrichtung (6) zur Messung des Ist-Drucks (pist), mit welchem Spritzflüssigkeit beaufschlagt wird,
- wobei die Druckmesseinrichtung (6) in der ersten Fluidleitung zwischen Pumpe (4) und Gestänge (2) angeordnet ist,
- eine zweite Durchflussmesseinrichtung (7) zur Messung des Durchflusses von Spritzflüssigkeit vom Gestänge (2) in Richtung des Tanks (3),
- wobei die zweite Durchflussmesseinrichtung (7) in einer zweiten Fluidleitung zwischen Gestänge (2) und Tank (3) angeordnet ist,
- einen Druckregler (8) zur Druckregelung in der ersten Fluidleitung,
- wobei der Druckregler (8) nach der Pumpe (4) sowie zwischen Pumpe (4) und Tank (3) in einer dritten Fluidleitung angeordnet ist,
- eine Druckregelung (10) für eine Spritzflüssigkeit, die von der Feldspritze (1) ausbringbar ist, nach Anspruch 3.
